# EUROPEAN PATENT SPECIFICATION

(11) **EP 2 940 392 B1**
(45) Date of publication and mention of the grant of the patent: **01.11.2017**
(21) Application number: 15164208.9
(22) Date of filing: 20.04.2015
(51) Int. Cl.: F25B 40/02, F25B 40/06, F24F 11/00, F24F 1/40, F24F 1/12, F25D 17/06, F25B 49/02, F25B 13/00, F25D 29/00

(54) **METHOD FOR CONTROLLING AIR CONDITIONER**
VERFAHREN ZUR STEUERUNG EINER KLIMAANLAGE
PROCÉDÉ DE COMMANDE DE CLIMATISEUR

(30) Priority: 22.04.2014 KR 20140048086
(43) Date of publication of application: 04.11.2015
(73) Proprietor: LG Electronics Inc., Yeongdeungpo-gu Seoul 150-721 (KR)
(72) Inventor: JEON, Boohwan, 153-802 Seoul (KR)
(74) Representative: Vossius & Partner Patentanwälte Rechtsanwälte mbB

(56) References cited:
- EP-A2- 1 524 478
- WO-A2-2013/082306
- JP-B2- 3 232 852

## Description

### BACKGROUND

The present disclosure relates to a method for controlling an air conditioner, which is capable of reducing noises at night.

Air conditioners are home appliances that maintain indoor air in the most proper state according to use and purpose. Such an air conditioner includes an indoor unit installed in an indoor space and an outdoor unit supplying a refrigerant into the indoor unit. At least one indoor unit may be connected to the outdoor unit, and components such as a compressor and a heat exchanger are provided in the outdoor unit.

The air conditioner may perform cooling or heating operations according to a flow of the refrigerant supplied into the indoor unit.

In detail, when the air conditioner performs the cooling operation, the refrigerant compressed in the compressor of the outdoor unit is condensed while passing through the outdoor heat exchanger. When the condensed refrigerant is supplied into the indoor unit, the refrigerant may be decompressed in an indoor expansion device and be evaporated in an indoor heat exchanger. Thus, air introduced into the indoor unit descends in temperature by the evaporation of the refrigerant. Also, while an indoor fan rotates, the cooled air may be discharged into an indoor space.

When the heating operation is performed in the air conditioner, a flow of the refrigerant may be as follows. When a high-temperature high-pressure gas refrigerant is supplied from the compressor of the outdoor unit to the indoor unit, the refrigerant may be condensed while passing through the indoor heat exchanger. Heat released by the condensation of the refrigerant may raise a temperature of the air introduced into the indoor unit. Also, while the indoor fan rotates, the heated air may be discharged into the indoor space.

The air conditioner having the above-described functions may be increasingly used on the market and thus increases in function thereof. Particularly, as user's sensitivity with respect to noises increases, noise reduction technologies are an important part in development of air conditioners.

A main cause of the noises in the air conditioner may be noises of the compressor and fan of the outdoor unit and air-blowing and refrigerant noises of the indoor unit.

Korean Patent Publication No. "10-2000-0010414" (hereinafter, referred to as a related art) discloses a technology for reducing the air-blowing noises that is one of causes of the noises.

In detail, the related air may have a feature in which, when a low-noise operation mode key signal is inputted while the air conditioner operates, a wind angle and amount in a wind direction adjustment part are adjusted to preset wind angle and amount to correspond to the low-noise operation mode.

In the related art, the air-blowing noises of the air discharged from the indoor unit may be reduced, but flow noises of the refrigerant may not be reduced. Particularly, when the air conditioner operates with low noise at night, if the air-blowing noises of the refrigerant may be more sensitively felt.

Also, in the related art, a process for directly inputting the low-noise operation mode by a user to reduce the air-blowing noises has to be performed. Here, the input process may cause user's inconvenience. JP 3 232852 B2 relates to a superheat control device of an air conditioner having a compressor, a four-way switching valve, a plurality of indoor heat exchangers and a receiver.

### SUMMARY

Embodiments provide a method for controlling an air conditioner in which a low-noise operation is enabled.

In one embodiment, a method for controlling an air conditioner includes: determining time information for determining an execution time of a low-noise operation; and performing the low-noise operation according to the determined time information, wherein the performing of the low-noise operation includes: limiting a maximum value of an operation frequency of a compressor; and reducing an amount of refrigerant introduced into an indoor unit.

The performing of the low-noise operation may include reducing an amount of wind of an indoor blower.

The performing of the low-noise operation may further include limiting a maximum value of a rotation rate of an outdoor blower.

The maximum value of the rotation rate of the outdoor blower may be limited to about 70% or less of the maximum rotation rate of the outdoor blower.

The maximum value of the operation frequency of the compressor may be limited to about 50% or less of the maximum frequency of the compressor when the air conditioner perform a cooling operation and be limited to about 70% or less of the maximum frequency of the compressor when the air conditioner performs a heating operation.

The reducing of the amount of refrigerant introduced into the indoor unit may include increasing a target superheating degree and target supercooling degree of the indoor unit.

The increasing of the target superheating degree and target supercooling degree of the indoor unit may include reducing an opening degree of an expansion device provided in the indoor unit.

The determining the time information for determining the execution time of the low-noise operation may include: determining a reference time through a set operation process; and determining a range of the execution time of the low-noise operation on the basis of the determined reference time.

The set operation process may include: measuring an external air temperature at a set cycle; datarizing distribution of the external air temperature to store the datarized distribution; and setting a time period corresponding to the highest temperature in the distribution of the measured external air temperature as a reference time period.

The set operation process may include primary and secondary operation processes, and the method may further include comparing a reference time period set in the primary operation process to a reference time period set in the secondary operation process.

When a difference between the reference time period set in the primary operation process and the reference time period set in the secondary operation process occurs, the reference time period may be determined by using a mean value of data of the primary operation process and data of the secondary operation process.

The method may further include: recognizing whether a target pressure of a refrigeration cycle is satisfied while the low-noise operation is performed; and performing a supplementation operation if the target pressure is not satisfied.

When a target low-pressure is not satisfied while the air conditioner performs a cooling operation, the performing of the supplementation operation may include performing a primary supplementation operation in which a rotation rate of the outdoor blower varies.

The performing of the supplementation operation may further include performing a secondary supplementation operation in which an operation frequency of the compressor varies if the target low-pressure is not satisfied after the primary supplementation operation is performed.

The performing of the supplementation operation may further include performing a tertiary supplementation operation in which the outdoor blower and the compressor normally operate without limiting the rotation rate of the outdoor blower and the frequency of the compressor if the target low-pressure is not satisfied after the secondary supplementation operation is performed.

When a target high-pressure is not satisfied while the air conditioner performs a heating operation, the performing of the supplementation operation may include allowing the compressor to normally operate without limiting a frequency of the compressor.

The details of one or more embodiments are set forth in the accompanying drawings and the description below. Other features will be apparent from the description and drawings, and from the claims.

### BRIEF DESCRIPTION OF THE DRAWINGS

Fig. 1 is a view of an air conditioner according to an embodiment.
Fig. 2 is a system view of the air conditioner according to an embodiment.
Fig. 3 is a flowchart illustrating a process of setting time determination logic for performing a low-noise operation of the air conditioner according to an embodiment.
Fig. 4 is a graph of a time-varying temperature distribution.
Fig. 5 is a flowchart illustrating a process of controlling the air conditioner when a low-noise cooling operation depending on time determination logic is performed according to an embodiment.
Fig. 6 is a flowchart illustrating a process of controlling the air conditioner when a low-noise heating operation depending on time determination logic is performed according to an embodiment.

### DETAILED DESCRIPTION OF THE EMBODIMENTS

Hereinafter, exemplary embodiments will be described with reference to the accompanying drawings. The invention may, however, be embodied in many different forms and should not be construed as being limited to the embodiments set forth herein;

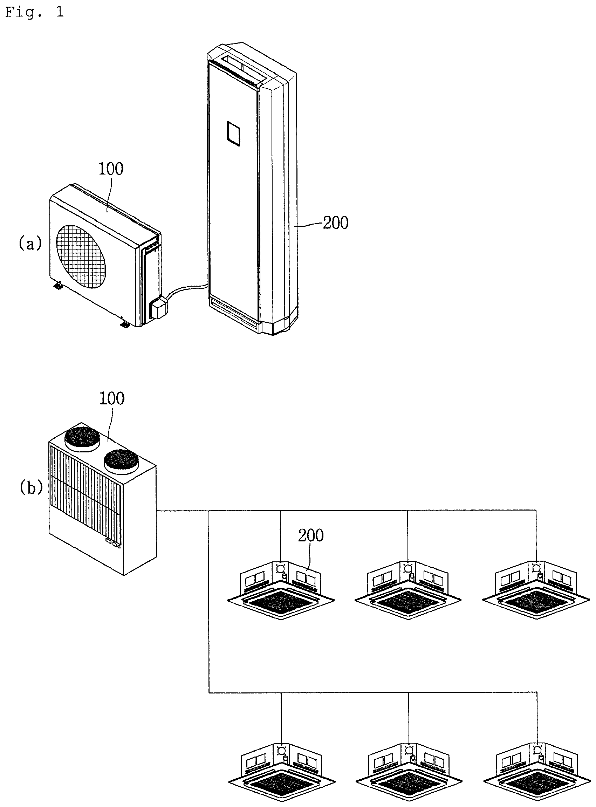

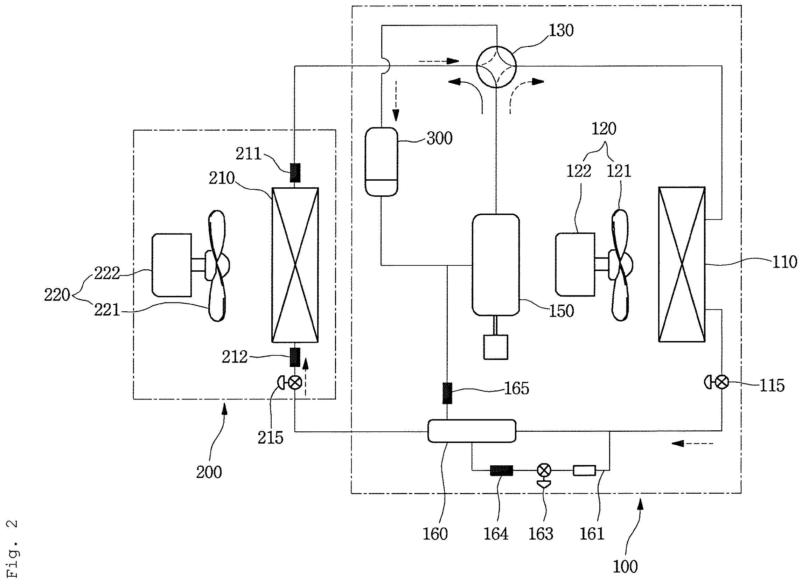

Fig. 1 is a view of an air conditioner according to an embodiment, and Fig. 2 is a system view of the air conditioner according to an embodiment.

Referring to Fig. 1, an air conditioner according to an embodiment includes an indoor unit 200 for discharging conditioned air into an indoor space and an outdoor unit 100 connected to the indoor unit 200 and disposed in an outdoor space.

The outdoor unit 100 and the indoor unit 200 are connected to each other through a refrigerant tube. As a refrigerant cycle operates, heated or cooled air is discharged into the indoor space from the indoor unit 200. The indoor unit 200 may be provided in plurality, and the plurality of indoor units 200 may be connected to the outdoor unit 100.

For example, as illustrated in Fig. 1A, the air conditioner may include the indoor unit 200 and the outdoor unit 100 which one-to-one correspond to each other.

On the other hand, as illustrated in Fig. 1B, the air conditioner may include a plurality of indoor units 200 and at least one outdoor unit 100 connected to the plurality of indoor units 200. The plurality of indoor unit 200 and the outdoor unit 100 may be connected to each other through a refrigerant tube.

The indoor unit 200 includes a discharge hole for discharging air heat-exchanged through an indoor heat exchanger 210. Also, a wind direction adjustment part for opening or closing the discharge hole and controlling a direction of the discharged air may be disposed in the discharge hole.

The indoor unit 200 may includes a vane to adjust an amount of air discharged from the discharge hole. For example, the vane may be movably provided to adjust an opening degree of the discharge hole. Also, the vane may move to adjust a discharge direction of air.

The indoor unit 200 further includes a display part for displaying operation information of the indoor unit 200 and an input part for inputting a set command. When a user inputs an operation starting command of the air conditioner through the input unit, the air conditioner may operate in a cooling mode or heating mode in respond to the inputted command.

In detail, referring to Fig. 2, the outdoor unit 100 include an outdoor heat exchanger 110 in which indoor air and the refrigerant are heat-exchanged with each other and an outdoor blower 120 for blowing the indoor air to the outdoor heat exchanger 110. The outdoor blower 120 may include an outdoor fan 121 and an outdoor fan motor 122.

Also, the outdoor unit further includes an accumulator 300 for separating a gas refrigerant from an evaporated refrigerant and a compressor 150 for suctioning and compressing the gas refrigerant separated in the accumulator 300.

The outdoor unit 100 further includes a 4-way valve 130 for converting a flow of the refrigerant compressed in the compressor 150. When the air conditioner performs a cooling operation, the 4-way valve 130 guides the refrigerant discharged from the compressor 150 to the outdoor heat exchanger 110. On the other hand, when the air conditioner performs a heating operation, the 4-way valve guides the refrigerant discharged from the compressor 150 to the indoor heat exchanger 210.

A main expansion device 115 is disposed on one side of the outdoor heat exchanger 110. The main expansion device 115 may include an electronic expansion valve (EEV). When the air conditioner performs the heating operation, the refrigerant decompressed in the main expansion device 115 may be evaporated in the outdoor heat exchanger 110.

The outdoor unit 110 may further include a supercooling heat exchanger 160 disposed on an outlet-side of the outdoor heat exchanger 110. For example, when the air conditioner performs the cooling operation, the refrigerant passing through the outdoor heat exchanger 110 may be introduced into the supercooling heat exchanger 160.

The supercooling heat exchanger 160 may be understood as an intermediate heat exchanger in which a first refrigerant circulating into a refrigerant system and a portion (a second refrigerant) of the refrigerant are branched and then heat-exchanged with each other. The first refrigerant may be a "main refrigerant" circulating into the refrigerant system, and the second refrigerant may be a "branched refrigerant" introduced into the compressor.

The outdoor unit 100 further includes a supercooling passage 161 in which the second refrigerant is branched and a supercooling expansion device 163 disposed in the supercooling passage 161 to decompress the second refrigerant. An amount of refrigerant flowing through the supercooling passage 161 may vary according to an opening degree of the supercooling expansion device 163. For example, the supercooling expansion device 163 may include an electronic expansion valve (EEV).

A plurality of temperature sensors 164 and 165 are provided in the supercooling passage 161. The plurality of temperature sensors 164 and 165 includes a first supercooling sensor 164 for detecting a refrigerant temperature before the refrigerant is introduced into the supercooling heat exchanger 160 and a second supercooling sensor 165 for detecting a refrigerant temperature after the refrigerant passes through the supercooling heat exchanger 160.

While the first and second refrigerants are heat-exchanged with each other in the supercooling heat exchanger 160, the first refrigerant may be excessively condensed or supercooled, and the second refrigerant may be heated or overheated.

A "superheating degree" of the second refrigerant may be recognized based on a temperature value of the refrigerant detected by each of the first and second supercooling sensors 164 and 165. For example, the temperature value detected by the first supercooling sensor 164, which is subtracted from the temperature value detected by the second supercooling sensor 165 may be recognized as the "superheating degree".

The superheating degree of the second refrigerant may vary according to the opening degree of the supercooling expansion device 163. For example, when the opening degree of the supercooling expansion device 163 decreases to reduce an amount of refrigerant flowing through the supercooling passage 161, the superheating degree of the second refrigerant may increase. On the other hand, when the opening degree of the supercooling expansion device 163 increases to increase an amount of refrigerant flowing through the supercooling passage 161, the superheating degree of the second refrigerant may decrease.

The indoor unit 200 includes an indoor heat exchanger 210 in which the indoor air and the refrigerant are heat-exchanged with each other and an indoor blower 220 for blowing the indoor air to the indoor heat exchanger 210. The indoor blower 220 may include an indoor fan 221 and an indoor fan motor 222.

Also, the indoor unit 200 may further include an indoor expansion device 215 disposed on one side of the indoor heat exchanger 210. The indoor expansion device 215 may include an electronic expansion valve (EEV). When the air conditioner performs the cooling operation, the refrigerant decompressed in the indoor expansion device 215 may be evaporated in the indoor heat exchanger 210.

A plurality of temperature sensors 211 and 212 may be disposed on inlet and outlet-sides of the indoor heat exchanger 210, respectively. The plurality of temperature sensors 211 and 212 include a first temperature sensor 211 and a second temperature sensor 212. A superheating degree or supercooling degree of a refrigerant cycle may be determined by values detected in the first and second temperature sensors 211 and 212.

For example, when the air conditioner performs the cooling operation, a difference between the values detected in the first and second temperature sensors 211 and 212 may represent the superheating degree. When the opening degree of the indoor expansion device 215 decreases to reduce an amount of refrigerant introduced into the indoor unit 200, the superheating degree may increase.

On the other hand, when the air conditioner performs the heating operation, a difference between the values detected in the first and second temperature sensors 211 and 212 may represent the supercooling degree. When the opening degree of the indoor expansion device 215 decreases to reduce an amount of refrigerant introduced into the indoor unit 200, the supercooling degree may increase.

Hereinafter, a method for controlling a night low-noise operation in the air conditioner including the above-described constitutions will be described.

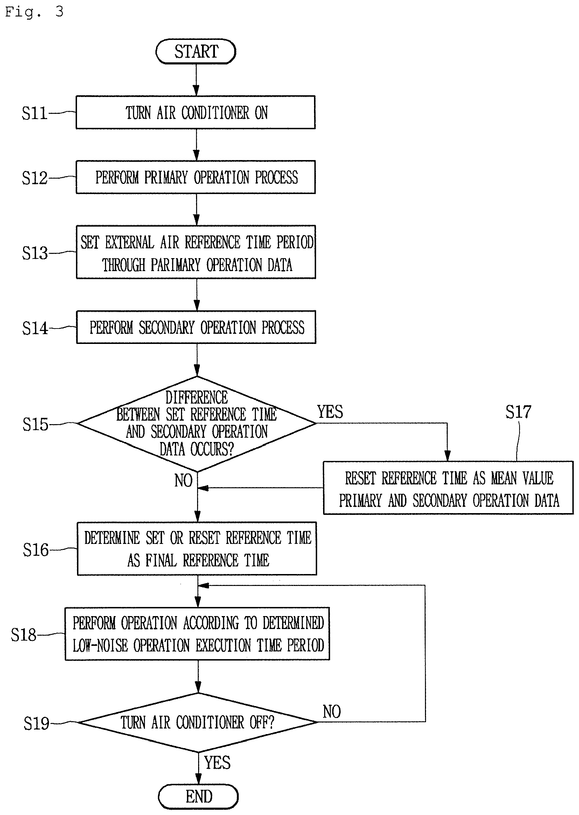

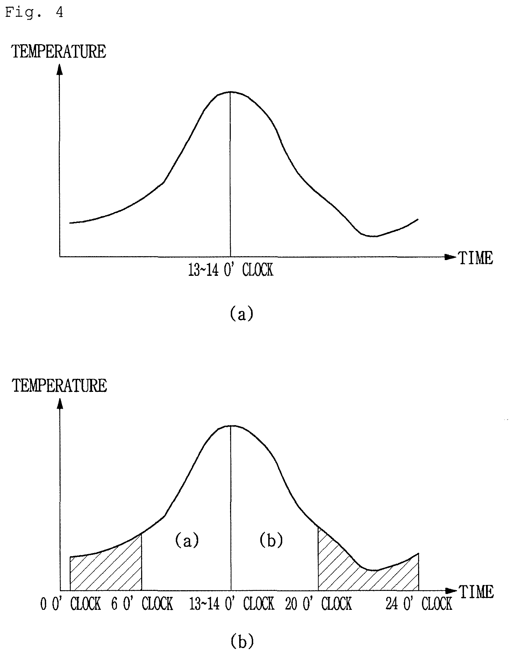

Fig. 3 is a flowchart illustrating a process of setting time determination logic for performing a low-noise operation of the air conditioner according to an embodiment, and Fig. 4 is a graph of a time-varying temperature distribution.

The air conditioner according to an embodiment may perform a night low-noise operation depending on time determination logic.

In detail, the method for controlling the air conditioner includes a time information determination process of determining an execution time of a low-noise operation and a process of performing the low-noise operation depending on the determined time information.

In the time information determination process include a process of determining a reference time through the set operation process and a process of determining an execution time range of the low-noise operation on the based on the determined reference time. The process of determining the reference time may include a process of performing a plurality of set operation processes. For example, the plurality of set operation processes may include operation processes that are set two times, i.e., a primary operation process and a secondary operation process.

The process of performing the low-noise operation includes an operation process for reducing refrigerant noises or air-blowing noises generated in the outdoor unit 100 and the indoor unit 200 within a range of an execution time of the determined low-noise operation.

In detail, with reference to Fig. 3, when the air conditioner is turned on, the primary operation process may be performed. When the primary operation process is performed, the state in which a power is supplied to the air conditioner for a preset time (period) may be maintained to measure a temperature of external air. For example, in operations S11 and S12, the preset time may be about one day (24 hours).

Also, distribution of the external air temperature measured during the primary operation process may be datarized (primary operation data), and a time or time period that represents the highest temperature in the measured external air temperature distribution may be set to a reference time (reference time period).

That is, illustrated in Fig. 4A, during the primary operation process, the temperature distribution measured for 24 hours may be detarized, and a time period that represents the highest temperature distribution of the measured temperature distribution is set to a reference time period. For example, in operation S13, a time period between 13 o'clock and 14 o'clock may be set to the reference time period.

When the primary operation process is completed, a secondary operation process may be performed in operation 14.

The secondary operation process includes a process of re-measuring an external air temperature to datarize and store the measured external air distribution (secondary operation data). Also, in operation S15, a process of comparing the reference time set by using the secondary operation data to the reference time set in the operation S13.

If a difference between the secondary operation data and information with respect to the set reference time does not occur, the reference time set in the operation S13 is determined as a final reference time in operation S16.

On the other hand, if the difference between the secondary operation data and the information with respect to the set reference time occurs, a mean value of the primary operation data and the secondary operation data may be reset to a reference time. Also, in operation S17, the reset reference time is determined as a final reference time.

The determined final reference time may be used as information for determining the low-noise operation execution time. In detail, a prior time period (a) and a posterior time period (b) may be determined with reference to the determined final reference time. For example, each of the prior time period (a) and the posterior time period (b) may be previously set to a predetermined value.

For example, if the final reference time is determined to 13 o'clock to 14 o'clock as illustrated in Fig. 4A, a time period between a time (6 o'clock) prior to 7 o'clock and a time (20 o'clock) posterior to 7 o'clock with respect to 13 o'clock that is a start time of the final reference time period may be determined as a low-noise operation exclusion time as illustrated in Fig. 4B.

Also, a remaining time period, i.e., a time period between 20 o'clock and 6 o'clock may be determined as the low-noise operation execution time period.

As described above, when the low-noise operation execution time period is determined, an operation of the air conditioner is performed according to the determined low-noise operation execution time period in operation S18. The low-noise operation may be understood as an operation for reducing the refrigerant noises and air-blowing noises of the outdoor unit 100 and the indoor unit 200. In operation S19, the low-noise operation may be performed until an OFF command of the air conditioner is inputted.

The low-noise operation may be performed all of the cooling and heating modes when the cooling and heating mode of the air conditioner operate. Hereinafter, a method for controlling the operations of the cooling and heating modes of the air conditioner will be described with reference to the accompanying drawings.

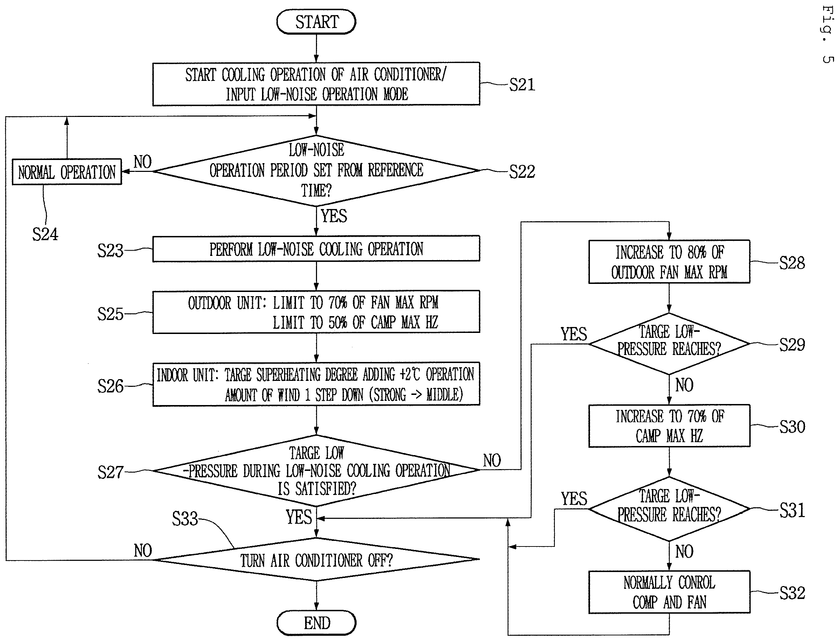

Fig. 5 is a flowchart illustrating a process of controlling the air conditioner when a low-noise cooling operation depending on time determination logic is performed according to an embodiment.

Referring to Fig. 5, in operation S21, the cooling operation of the air conditioner starts, and a low-noise operation mode is inputted. Before the cooling operation according to an embodiment is performed, the reference time and the low-noise operation execution time period according to the control method of Fig. 3 may be previously determined and stored in the air conditioner.

That is, the control method of Fig. 5 may be understood as an embodiment of the performing of the cooling operation of the air conditioner in the operation S18 of Fig. 3.

Whether an operation time of the air conditioner is included in the set low-noise operation execution time period may be recognized. Here, in operation S22, the operation time of the air conditioner may be a corresponding reservation time when the present time or operation reservation command is inputted.

When the operation time of the air conditioner is not include in the set low-noise operation execution time period, each of the indoor unit 100 and the outdoor unit 200 may perform a normal operation. Here, in operation S24, the normal operation may be understood as an operation of the air conditioner in which the low-noise operation mode is not performed.

On the other hand, in operation S23, when the operation time of the air conditioner is included in the set low-noise operation execution time period, a low-noise cooling operation is performed.

When the low-noise cooling operation is performed, a control of reducing the refrigerant noises and air-blowing noises of the indoor unit 100 and the outdoor unit 200 is performed. In detail, to reduce the noises of the outdoor unit 100, a rotation rate of the outdoor blower 120 may be controlled to be less than a preset rotation rate. For example, the preset rotation rate may be about 70% of a maximum rotation rate.

Also, a frequency of the compressor 150 may be controlled to be less than a preset frequency. For example, the present frequency may be about 50% of a maximum frequency. As described above, when the frequency of the compressor 150 is controlled, the outdoor unit 100 may operate to a level of about 50% or less of the maximum load required for performing the cooling operation.

To reduce the refrigerant noises generated in the indoor unit 200, an opening degree of the indoor expansion device 215 may be adjusted.

In detail, to increase a target superheating degree of a refrigeration cycle, an opening degree of the indoor expansion device 215 may decrease. When the opening degree of the indoor expansion device 215 decreases, a temperature difference between an inlet and outlet of the indoor heat exchanger 210 may increase. Also, the set temperature may be about 2°C. When the target superheating degree increases, an amount of refrigerant introduced into the indoor unit may be reduced.

Also, to reduce the noises generated in the indoor blower 220, an amount of wind of the indoor blower 220 may be reduced. For example, the amount of wind of the indoor blower 200 may be controlled in stages. Thus, the amount of wind of the indoor blower 220 may be reduced by one stage (e.g., strong -> middle) to reduce the air-blowing noises in operation S26.

When the target superheating degree increases, an amount of refrigerant passing through the indoor heat exchanger 210 may decrease to allow a low-pressure of the refrigerant cycle to increase. Thus, a situation in which the target low-pressure is not satisfied may occur. Particularly, in case of a tropical night at which external air has a high temperature, the target low-pressure may not be satisfied to reduce cooling performance.

Thus, in the current embodiment, while the low-noise cooling operation is performed, if the target low-pressure is not satisfied in operation S27, a cooling supplementation operation process for supplementing the dissatisfaction of the target low-pressure may be performed. The cooling supplementation operation process may be understood as an operation process for checking whether the target low-pressure is satisfied while an operation of the indoor unit 100 varies in stages.

In detail, the cooling supplementation operation process includes a primary supplementation operation process (S28) in which a rotation rate of the outdoor blower 120 varies, a secondary supplementation operation process (S30) in which an operation frequency of the compressor 150 varies, and a tertiary supplementation operation process (S32) in which the outdoor blower 120 and the compressor 150 normally operate.

In the primary supplementation operation process, the rotation rate of the outdoor blower 120 that is controlled to about 70% or less of the maximum rotation rate in operation S24 increases up to about 80% of the maximum rotation rate. In operation S29, after the primary supplementation operation process is performed, whether the target low-pressure is satisfied is checked.

If the target low-pressure is not satisfied after the primary supplementation operation process is performed, the secondary supplementation operation process is performed. In the secondary supplementation operation process, the operation frequency of the compressor 150 that is controlled to about 50% or less of the maximum frequency in operation S24 increases up to about 70% of the maximum frequency, and then, whether the target low-pressure is satisfied is checked in operation S31.

If the target low-pressure is not satisfied after the secondary supplementation operation process is performed, the tertiary supplementation operation process is performed. In the tertiary supplementation operation process, the outdoor blower 120 and the compressor 150 are controlled so that the outdoor blower 120 and the compressor 150 normally operate adequate for the preset temperature to exert the cooling performance required by the user.

Here, the normal operation may represent a state in which the outdoor blower 120 and the compressor 150 operate based on the preset temperature and indoor temperature without limiting the operations of the outdoor blower 120 and the compressor 150. Thus, in operation S32, the rotation rate of the outdoor blower 120 may be controlled to operate up to about 100% of the maximum rotation rate, and the frequency of the compressor 150 may be controlled to operate up to about 100% of the maximum frequency.

In operation S33, the control method may be performed until the OFF command is inputted into the air conditioner.

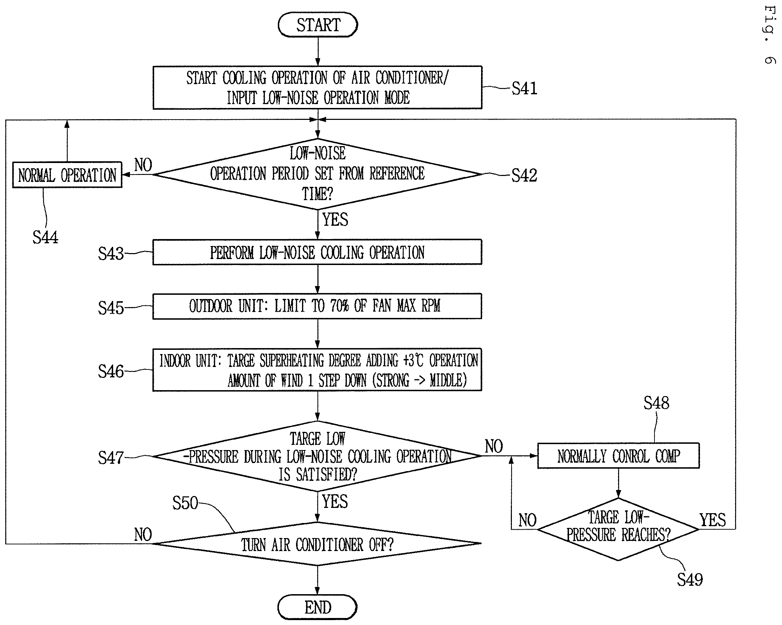

Fig. 6 is a flowchart illustrating a process of controlling the air conditioner when a low-noise heating operation depending on time determination logic is performed according to an embodiment.

Referring to Fig. 6, in operation S41, the heating operation of the air conditioner starts, and a low-noise operation mode is inputted. Before the cooling operation according to an embodiment is performed, the reference time and the low-noise operation execution time period according to the control method of Fig. 3 may be previously determined and stored in the air conditioner.

That is, the control method of Fig. 6 may be understood as an embodiment of the performing of the heating operation of the air conditioner in the operation S18 of Fig. 3.

Whether an operation time of the air conditioner is included in the set low-noise operation execution time period may be recognized. Here, in operation S42, the operation time of the air conditioner may be a corresponding reservation time when the present time or operation reservation command is inputted.

In operation S44, when the operation time of the air conditioner is not include in the set low-noise operation execution time period, each of the indoor unit 100 and the outdoor unit 200 may perform a normal operation.

On the other hand, in operation S43, when the operation time of the air conditioner is included in the set low-noise operation execution time period, a low-noise heating operation is performed.

When the low-noise heating operation is performed, a control of reducing the refrigerant noises and air-blowing noises of the indoor unit 100 and the outdoor unit 200 is performed. In detail, a frequency of the compressor 150 may be controlled to be less than a preset frequency. For example, the present frequency may be about 50% of a maximum frequency.

Also, since the maximum rotation number of the fan of the outdoor blower 120 is not limited, a defrosting operation may be smoothly performed in operation S45.

Also, when the low-noise heating operation is performed, an opening degree of the supercooling expansion device 163 may be adjusted to reduce the refrigerant noises.

In detail, to increase a target supercooling degree of a refrigeration cycle, an opening degree of the indoor expansion device 215 may be reduced. When the opening degree of the indoor expansion device 215 decreases, a temperature difference between an inlet and outlet of the indoor heat exchanger 210 may increase. Also, the set temperature may be about 3°C. When the target supercooling degree increases, an amount of refrigerant introduced into the indoor unit may be reduced.

Also, to reduce the noises generated in the indoor blower 220, an amount of wind of the indoor blower 220 may be reduced. For example, the amount of wind of the indoor blower 200 may be controlled in stages. Thus, the amount of wind of the indoor blower 220 may be reduced by one stage (e.g., strong -> middle) to reduce the air-blowing noises in operation S46.

When the target superheating degree increases, an amount of refrigerant passing through the indoor heat exchanger 210 may decrease to allow a high-pressure of the refrigerant cycle to decrease. Thus, a situation in which the target low-pressure is not satisfied may occur. Thus, the target high-pressure may not be satisfied to deteriorate the heating performance.

Thus, in the current embodiment, while the low-noise heating operation is performed, if the target high-pressure is not satisfied in operation S47, a heating supplementation operation process for supplementing the dissatisfaction of the target high-pressure may be performed. In the heating supplementation operation process may represent a state in which the compressor 150 normally operates without limiting the operation frequency of the compressor 150.

That is, when the low-noise heating operation is performed, if the target high-pressure of the refrigeration cycle is not satisfied, the compressor 150 may normally operate till reaching the target high-pressure in operations S48 and S49.

Thus, the heating performance may be improved by the above-described heating supplementation operation.

According to the embodiments, even though a separate operation time is not set by the user, the night low-noise operation depending on time determination logic may be controlled to improve convenience in use and reduce power consumption due to the low-noise operation.

Also, when the night low-noise operation is controlled, the reduction of the refrigerant noises within the indoor unit as well as the noise reduction due to the control of the fan and compressor of the outdoor unit may be realized to more effectively reduce the noises at night.

Also, when a target high-low pressure that is required for the night low-noise operation is not satisfied, supplementation logic for supplementing the dissatisfied high-low pressure. Thus, the air conditioner may be improved in performance to improve consumer's product satisfaction.

Although embodiments have been described with reference to a number of illustrative embodiments thereof, it should be understood that numerous other modifications and embodiments can be devised by those skilled in the art that will fall within the appended claims. In addition to variations and modifications in the component parts and/or arrangements, alternative uses will also be apparent to those skilled in the art.

## Claims

1. A method for controlling an air conditioner, the method comprising:
determining time information for determining an execution time of a low-noise operation; and
performing the low-noise operation according to the determined time information,
wherein the determining the time information for determining the execution time of the low-noise operation comprises:
determining a reference time through a predetermined operation process; and
determining a range of the execution time of the low-noise operation on the basis of the determined reference time,
wherein the performing of the low-noise operation comprises:
limiting a maximum value of an operation frequency of a compressor (150); and
increasing a target superheating degree and target supercooling degree of an indoor unit (200) to reduce an amount of refrigerant introduced into the indoor unit (200).

2. The method according to claim 1, wherein the performing of the low-noise operation further comprises:
reducing an amount of wind of an indoor blower (220); and
limiting a maximum value of a rotation rate of an outdoor blower (120).

3. The method according to claim 2, wherein the maximum value of the rotation rate of the outdoor blower (120) is limited to about 70% or less of the maximum rotation rate of the outdoor blower (120).

4. The method according to any of claims 1 to 3, wherein the maximum value of the operation frequency of the compressor (150) is limited to about 50% or less of the maximum frequency of the compressor (150) when the air conditioner perform a cooling operation and is limited to about 70% or less of the maximum frequency of the compressor (150) when the air conditioner performs a heating operation.

5. The method according to claim 4, wherein the increasing of the target superheating degree and target supercooling degree of the indoor unit (200) comprises reducing an opening degree of an expansion device (163) provided in the indoor unit (200).

6. The method according to any of claims 1 to 5, wherein the predetermined operation process comprises:
measuring an external air temperature at a predetermined cycle;
storing information of distribution of the external air temperature; and
setting a time period corresponding to the highest temperature in the distribution of the measured external air temperature as a reference time period.

7. The method according to claim 6, wherein the predetermined operation process comprises primary and secondary operation processes, and
the method further comprises comparing a reference time period set in the primary operation process to a reference time period set in the secondary operation process.

8. The method according to claim 7, wherein, when a difference between the reference time period set in the primary operation process and the reference time period set in the secondary operation process occurs, the reference time period is determined by using a mean value of data of the primary operation process and data of the secondary operation process.

9. The method according to any of claims 1 to 8, further comprising:
recognizing whether a target pressure of a refrigeration cycle is satisfied while the low-noise operation is performed; and
performing a supplementation operation if the target pressure is not satisfied.

10. The method according to claim 9, wherein, when a target low-pressure is not satisfied while the air conditioner performs a cooling operation, the performing of the supplementation operation comprises performing a primary supplementation operation in which a rotation rate of the outdoor blower (120) varies.

11. The method according to claim 10, wherein the performing of the supplementation operation further comprises performing a secondary supplementation operation in which an operation frequency of the compressor (150) varies if the target low-pressure is not satisfied after the primary supplementation operation is performed.

12. The method according to claim 11, wherein the performing of the supplementation operation further comprises performing a tertiary supplementation operation in which the outdoor blower (120) and the compressor (150) normally operate without limiting the rotation rate of the outdoor blower (120) and the frequency of the compressor (150) if the target low-pressure is not satisfied after the secondary supplementation operation is performed.

13. The method according to any of claims 9 to 12, wherein, when a target high-pressure is not satisfied while the air conditioner performs a heating operation, the performing of the supplementation operation comprises allowing the compressor (150) to normally operate without limiting a frequency of the compressor (150).

14. Apparatus for controlling an air conditioner, wherein said apparatus is configured to perform the method steps according to any one of claims 1 to 13.

## Patentansprüche

1. Verfahren zur Steuerung einer Klimaanlage, wobei das Verfahren aufweist:
Bestimmen einer Zeitinformation zum Bestimmen einer Ausführungszeit eines geräuscharmen Betriebs; und
Durchführen des geräuscharmen Betriebs gemäß der bestimmten Zeitinformation,
wobei das Bestimmen der Zeitinformation zum Bestimmen der Ausführungszeit des geräuscharmen Betriebs aufweist:
Bestimmen einer Referenzzeit durch einen vorgegebenen Betriebsprozess,
Bestimmen eines Bereichs der Ausführungszeit des geräuscharmen Betriebs auf Basis der bestimmten Referenzzeit,
wobei das Durchführen des geräuscharmen Betriebs aufweist:
Begrenzen eines maximalen Werts einer Betriebsfrequenz eines Verdichters (150); und
Erhöhen eines Ziel-Siedeverzugsgrads und Ziel-Unterkühlungsgrads einer Inneneinheit (200), um eine in die Inneneinheit (200) eingespeiste Kältemittelmenge zu reduzieren.

2. Verfahren nach Anspruch 1, wobei das Durchführen des geräuscharmen Betriebs ferner aufweist:
Reduzieren einer Windmenge eines Innengebläses (220); und
Begrenzen eines maximalen Werts einer Rotationsrate eines Außengebläses (120).

3. Verfahren nach Anspruch 2, wobei der maximale Wert der Rotationsrate des Außengebläses (120) auf ungefähr 70% oder weniger der maximalen Rotationsrate des Außengebläses (120) begrenzt wird.

4. Verfahren nach einem der Ansprüche 1 bis 3, wobei der maximale Wert der Betriebsfrequenz des Verdichters (150) auf ungefähr 50% oder weniger der maximalen Frequenz des Verdichters (150) begrenzt wird, wenn die Klimaanlage einen Kühlbetrieb durchführt, und auf ungefähr 70% oder weniger der maximalen Frequenz des Verdichters (150) begrenzt wird, wenn die Klimaanlage einen Heizbetrieb durchführt.

5. Verfahren nach Anspruch 4, wobei das Erhöhen des Ziel-Siedeverzugsgrads und Ziel-Unterkühlungsgrads der Inneneinheit (200) aufweist: Reduzieren eines Öffnungsgrads einer in der Inneneinheit (200) bereitgestellten Expansionsvorrichtung (163).

6. Verfahren nach einem der Ansprüche 1 bis 5, wobei der vorgegebene Betriebsprozess aufweist:
Messen einer Außenlufttemperatur bei einem vorgegebenen Zyklus;
Speichern von Daten der Außenlufttemperaturverteilung; und
Setzen einer Zeitdauer, die der höchsten Temperatur in der Verteilung der gemessenen Außenlufttemperatur entspricht, als eine Referenzzeitdauer.

7. Verfahren nach Anspruch 6, wobei der vorgegebene Betriebsprozess erste und zweite Betriebsprozesse aufweist, und
das Verfahren ferner aufweist: Vergleichen einer in dem ersten Betriebsprozess gesetzten Referenzzeitdauer mit einer in dem zweiten Betriebsprozess gesetzten Referenzzeitdauer.

8. Verfahren nach Anspruch 7, wobei im Fall eines Auftretens einer Differenz zwischen der in dem ersten Betriebsprozess gesetzten Referenzzeitdauer und der in dem zweiten Betriebsprozess gesetzten Referenzzeitdauer die Referenzzeitdauer unter Verwendung eines Mittelwerts von Daten des ersten Betriebsprozesses und Daten des zweiten Betriebsprozesses bestimmt wird.

9. Verfahren nach einem der Ansprüche 1 bis 8, ferner aufweisend:
Erkennen, ob beim Durchführen des geräuscharmen Betriebs ein Zieldruck eines Kältezyklus eingehalten wird; und
Durchführen eines Zusatzbetriebs, falls der Zieldruck nicht eingehalten wird.

10. Verfahren nach Anspruch 9, wobei in dem Fall, dass ein niedriger Zieldruck nicht eingehalten wird, während die Klimaanlage einen Kühlbetrieb durchführt, das Durchführen des Zusatzbetriebs aufweist: Durchführen eines ersten Zusatzbetriebs, in welchem eine Rotationsrate des Außengebläses (120) geändert wird.

11. Verfahren nach Anspruch 10, wobei das Durchführen des Zusatzbetriebs ferner aufweist: Durchführen eines zweiten Zusatzbetriebs, in welchem eine Betriebsfrequenz des Verdichters (150) geändert wird, falls der niedrige Zieldruck nicht eingehalten wird, nachdem der erste Zusatzbetrieb durchgeführt worden ist.

12. Verfahren nach Anspruch 11, wobei das Durchführen des Zusatzbetriebs ferner aufweist: Durchführen eines dritten Zusatzbetriebs, in welchem das Außengebläse (120) und der Verdichter (150) ohne Begrenzung der Rotationsrate des Außengebläses (120) und der Frequenz des Verdichters (150) normal arbeiten, falls der niedrige Zieldruck nicht eingehalten wird, nachdem der zweite Zusatzbetrieb durchgeführt worden ist.

13. Verfahren nach einem der Ansprüche 9 bis 12, wobei in dem Fall, dass ein hoher Zieldruck nicht eingehalten wird, während die Klimaanlage einen Heizbetrieb durchführt, das Durchführen des Zusatzbetriebs aufweist: Laufenlassen des Verdichters (150) im Normalbetrieb ohne Begrenzung einer Frequenz des Verdichters (150).

14. Vorrichtung zur Steuerung einer Klimaanlage, wobei die Vorrichtung konfiguriert ist, die Verfahrensschritte nach einem der Ansprüche 1 bis 13 durchzuführen.

## Revendications

1. Procédé de commande d'un climatiseur, le procédé comprenant :
la détermination d'informations de temps pour déterminer un temps d'exécution d'un fonctionnement silencieux ; et
la réalisation du fonctionnement silencieux selon les informations de temps déterminées,
dans lequel la détermination des informations de temps pour déterminer le temps d'exécution du fonctionnement silencieux comprend :
la détermination d'un temps de référence par un processus de fonctionnement prédéterminé ; et
la détermination d'une étendue du temps d'exécution du fonctionnement silencieux sur la base du temps de référence déterminé,
dans lequel la réalisation du fonctionnement silencieux comprend :
la limitation d'une valeur maximum d'une fréquence de fonctionnement d'un compresseur (150) ; et
l'augmentation d'un degré de surchauffe cible et un degré de surrefroidissement cible d'une unité intérieure (200) pour réduire une quantité de réfrigérant introduite dans l'unité intérieure (200).

2. Procédé selon la revendication 1, dans lequel la réalisation du fonctionnement silencieux comprend en outre :
la réduction d'une quantité de vent d'une soufflante intérieure (220) ; et
la limitation d'une valeur maximum d'une vitesse de rotation d'une soufflante extérieure (120).

3. Procédé selon la revendication 2, dans lequel la valeur maximum de la vitesse de rotation de la soufflante extérieure (120) est limitée à environ 70 % ou moins de la vitesse de rotation maximum de la soufflante extérieure (120).

4. Procédé selon l'une quelconque des revendications 1 à 3, dans lequel la valeur maximum de la fréquence de fonctionnement du compresseur (150) est limitée à environ 50 % ou moins de la fréquence maximum du compresseur (150) lorsque le climatiseur réalise une opération de refroidissement et est limitée à environ 70 % ou moins de la fréquence maximum du compresseur (150) lorsque le climatiseur réalise une opération de chauffage.

5. Procédé selon la revendication 4, dans lequel l'augmentation du degré de surchauffe cible et du degré de surrefroidissement cible de l'unité intérieure (200) comprend la réduction d'un degré d'ouverture d'un dispositif d'expansion (163) prévu dans l'unité intérieure (200).

6. Procédé selon l'une quelconque des revendications 1 à 5, dans lequel le processus de fonctionnement prédéterminé comprend :
la mesure d'une température d'air externe à un cycle prédéterminé ;
l'enregistrement d'informations de distribution de la température d'air externe ; et
le réglage d'une période de temps correspondant à la température la plus élevée dans la distribution de la température d'air externe mesurée comme une période de temps de référence.

7. Procédé selon la revendication 6, dans lequel le processus de fonctionnement prédéterminé comprend des processus de fonctionnement principal et secondaire et le procédé comprend en outre la comparaison d'une période de temps de référence définie dans le processus de fonctionnement principal avec une période de temps de référence définie dans le processus de fonctionnement secondaire.

8. Procédé selon la revendication 7, dans lequel lorsqu'une différence entre la période de temps de référence définie dans le processus de fonctionnement principal et la période de temps de référence définie dans le second processus de fonctionnement apparaît, la période de temps de référence est déterminée en utilisant une valeur moyenne de données du processus de fonctionnement principal et de données du processus de fonctionnement secondaire.

9. Procédé selon l'une quelconque des revendications 1 à 8, comprenant en outre :
le fait de reconnaître si une pression cible d'un cycle de réfrigération est satisfaite alors que le fonctionnement silencieux est réalisé ; et
la réalisation d'une opération de supplémentation si la pression cible n'est pas satisfaite.

10. Procédé selon la revendication 9, dans lequel lorsqu'une basse pression cible n'est pas satisfaite alors que le climatiseur réalise une opération de refroidissement, la réalisation de l'opération de supplémentation comprend la réalisation d'une opération de supplémentation principale, dans laquelle une vitesse de rotation de la soufflante extérieure (120) varie.

11. Procédé selon la revendication 10, dans lequel la réalisation de l'opération de supplémentation comprend en outre la réalisation d'une opération de supplémentation secondaire, dans lequel une fréquence de fonctionnement du compresseur (150) varie si la basse pression cible n'est pas satisfaite après que l'opération de supplémentation principale a été réalisée.

12. Procédé selon la revendication 11, dans lequel la réalisation de l'opération de supplémentation comprend en outre la réalisation d'une opération de supplémentation tertiaire, dans lequel la soufflante extérieure (120) et le compresseur (150) fonctionnent normalement sans limitation de la vitesse de rotation de la soufflante extérieure (120) et la fréquence du compresseur (150) si la basse pression cible n'est pas satisfaite après que l'opération de supplémentation secondaire a été réalisée.

13. Procédé selon l'une quelconque des revendications 9 à 12, dans lequel lorsqu'une haute pression cible n'est pas satisfaite alors que le climatiseur réalise une opération de chauffage, la réalisation de l'opération de supplémentation comprend l'autorisation du compresseur (150) de fonctionner normalement sans limitation d'une fréquence du compresseur (150).

14. Appareil de commande d'un climatiseur, dans lequel ledit appareil est configuré pour réaliser les étapes de procédé selon l'une quelconque des revendications 1 à 13.
